# EUROPEAN PATENT APPLICATION

(11) **EP 4 629 303 A2**
(43) Date of publication of application: **08.10.2025**
(21) Application number: 25166579.0
(22) Date of filing: 27.03.2025
(51) Int. Cl.: H01M 4/04, H01M 4/38, H01M 4/505, H01M 4/525, H01M 4/58, H01M 10/0525, H01M 4/587

(54) **DRY ELECTRODE FILM AND METHOD OF MANUFACTURING THE SAME**

(30) Priority: 05.04.2024 KR 20240046773
(71) Applicant: SAMSUNG SDI CO., LTD., Yongin-si, Gyeonggi-do 17084 (KR)
(72) Inventor: Lee, Gaeon, Yongin-si, Gyeonggi-do 17084 (KR); Lee, Jinhyon, Yongin-si, Gyeonggi-do 17084 (KR); Kwon, Ilkyong, Yongin-si, Gyeonggi-do 17084 (KR); Bang, Seunggwon, Yongin-si, Gyeonggi-do 17084 (KR); Bang, Youmin, Yongin-si, Gyeonggi-do 17084 (KR)
(74) Representative: Gulde & Partner

(57) **Abstract**

A dry electrode film and a manufacturing method thereof are disclosed. The manufacturing method of a dry electrode film includes: performing a first dry mixing an electrode active material, a dry binder, and a conductive material to prepare a first dry mixture; performing a second dry mixing on the first dry mixture to prepare a paste-like second dry mixture; and performing disintegration on the second dry mixture to prepare a third dry mixture, the disintegration being performed at a temperature in the range of 5°C to 18°C and which less than a temperature during the second dry mixing.

## Description

### BACKGROUND

### 1 Field

One or more embodiments of the present disclosure relate to a dry electrode film for a rechargeable lithium battery and a method of manufacturing the dry electrode film.

### 2. Description of the Related Art

With the rapid spread of electronic devices, such as smartphones, tablets, and laptops, and electric vehicles that use batteries, it is desirable to develop rechargeable batteries having high energy density and high capacity. Therefore, intensive research has been conducted to improve performance of rechargeable lithium batteries.

A rechargeable lithium battery includes a positive electrode, a negative electrode, and an electrolyte. The positive and negative electrodes include an active material in which intercalation and deintercalation are possible. The rechargeable lithium batteries may generate electrical energy, which is caused by oxidation and reduction reactions when the lithium ions are intercalated and deintercalated.

### SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed toward a method of manufacturing a dry electrode film through which the over-fiberization of a binder is prevented or reduced to achieve excellent tensile strength of the dry electrode film.

One or more aspects of embodiments of the present disclosure are directed toward a method of manufacturing a dry electrode including the dry electrode film.

One or more aspects of embodiments of the present disclosure are directed toward a rechargeable lithium battery in which the dry electrode is included to accomplish superior initial charge/discharge efficiency.

Additional aspects of embodiments will be set forth in part in the description which follows and, in part, will be apparent from the description, or may be learned by practice of the presented embodiments of the disclosure.

According to one or more embodiments of the present disclosure, a method of manufacturing a dry electrode film including: performing a first dry mixing of an electrode active material, a dry binder, and a conductive material to prepare a first dry mixture; performing a second dry mixing of the first dry mixture to prepare a paste-like second dry mixture (in which, for example, the dry binder is fiberized); and performing disintegration of the second dry mixture by a mill and/or a crusher to prepare a third dry mixture, the disintegration being performed at a temperature in the range of 5°C to 18°C and which is less than a temperature during the second dry mixing (i.e. a temperature of the mixture while performing the second dry mixing).

According to one or more embodiments of the present disclosure, a method of manufacturing a dry electrode may include: manufacturing a dry electrode film; and performing a lamination of a current collector and the dry electrode film. The act of manufacturing the dry electrode film may include: adding an electrode active material, a dry binder, and a conductive material to prepare a first dry mixture; performing dry mixing on the first dry mixture to prepare a second dry mixture in which the dry binder is fiberized; and performing disintegration on the second dry mixture to prepare a third dry mixture, the disintegration being performed at a temperature less than a fiberization temperature of the dry binder.

According to one or more embodiments of the present disclosure, a rechargeable lithium battery may include the dry electrode manufactured in the method.

### BRIEF DESCRIPTION OF DRAWINGS

The above and other aspects and features of certain embodiments of the present disclosure will be more apparent from the following description taken in conjunction with the accompanying drawings.
FIG. 1 is a simplified conceptual diagram showing a rechargeable lithium battery according to one or more embodiments of the present disclosure.
FIGS. 2-5 each is a simplified diagram showing a rechargeable lithium battery according to one or more embodiments of the present disclosure.
FIG. 6 is a flow chart showing a method of manufacturing a dry electrode film according to one or more embodiments of the present disclosure.
FIG. 7A is a scanning electron microscope (SEM) image showing a dry electrode film manufactured according to a comparative example of the present disclosure.
FIG. 7B is an SEM image showing a dry electrode film manufactured according to one or more embodiments of the present disclosure.

### DETAILED DESCRIPTION

In order to sufficiently understand the configurations and aspects of embodiments of the present disclosure, one or more embodiments of the present disclosure will be described with reference to the accompanying drawings. It should be noted, however, that the present disclosure is not limited to the following example embodiments and may be implemented in one or more suitable forms. Rather, the example embodiments are provided only to illustrate the subject matter of the present disclosure and let those having ordinary skill in the art fully understand the scope of the present disclosure.

In the present disclosure, it will be understood that if (e.g., when) an element is referred to as being on another element, the element may be directly on the other element or intervening elements may be present therebetween. In some embodiments, if (e.g., when) an element is referred to as being "directly on" another element, there are no intervening elements present. In the drawings, thicknesses of some components may be exaggerated to effectively explain the technical contents of the present disclosure. Like reference numerals refer to like elements throughout the present disclosure, and duplicative descriptions thereof may not be provided for conciseness.

Unless otherwise specially noted in the present disclosure, the singular forms "a," "an," and "the" are intended to include the plural forms as well, unless the context clearly indicates otherwise. Further, the utilization of "may" when describing embodiments of the present disclosure refers to "one or more embodiments of the present disclosure." The terms "comprises/includes" and/or "comprising/including" used in the disclosure do not exclude the presence or addition of one or more other components.

As used herein, the term "combination thereof" may refer to a mixture, a stack, a composite, a copolymer, an alloy, a blend, or a reaction product of the constituents.

In the present disclosure, expressions, such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., concurrently (e.g., simultaneously)) a and b, both (e.g., concurrently (e.g., simultaneously)) a and c, both (e.g., concurrently (e.g., simultaneously)) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

In present disclosure, the term "Group" as utilized herein refers to a group of the Periodic Table of Elements according to the 1 to 18 grouping system of the International Union of Pure and Applied Chemistry ("IUPAC").

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Unless otherwise especially defined in the disclosure, a particle diameter may be an average particle diameter. In some embodiments, a particle diameter may indicate an average particle diameter (D₅₀) where a cumulative volume is about 50 volume% in a particle size distribution. The average particle diameter (D₅₀) may be measured by any suitable method generally used in the art, for example, by a particle size analyzer, for example, HORIBA, LA-950 laser particle size analyzer, a transmission electron microscope (TEM), and/or a scanning electron microscope (SEM). In some embodiments, a dynamic light-scattering (DLS) measurement device is used to perform a data analysis, the number of particles is counted for each particle size range, and then from the data, an average particle diameter (D₅₀) value may be obtained through a calculation. In some embodiments, a laser scattering method may be utilized to measure the average particle diameter (D₅₀). In the laser scattering method, target particles are distributed in a distribution solvent, introduced into a laser scattering particle measurement device (e.g., MT3000 commercially available from Microtrac, Inc.), irradiated with ultrasonic waves of 28 kHz at a power of 60 W, and then an average particle diameter (D₅₀) is calculated in the 50% standard of particle diameter distribution in the measurement device. D₅₀ refers to the average diameter (or size) of particles whose cumulative volume corresponds to 50 vol% in the particle size distribution (e.g., cumulative distribution), and refers to the value of the particle size corresponding to 50% from the smallest particle if (e.g., when) the total number of particles is 100% in the distribution curve accumulated in the order of the smallest particle size to the largest particle size. In the present disclosure, if (e.g., when) particles are spherical, "diameter" indicates an average particle diameter, and if (e.g., when) the particles are non-spherical, the "diameter" indicates a major axis length.

In the present disclosure, the term "dried" or "dry" may refer to a state that does not intentionally contact a solvent, such as a process solvent, or does not intentionally include a solvent, such as a process solvent. For example, a dry binder may indicate a binder that does not intentionally contact a solvent or does not intentionally include a solvent. For example, a dry binder may denote a binder that is in a liquid state at room temperature without being mixed with a solvent.

In the present disclosure, the language "dry electrode" or "dry electrode film" may refer to an electrode or an electrode film that does not include a solvent or intentionally does not use a solvent in manufacturing an electrode. A solvent may include a process solvent, a process solvent residue, a process solvent impurity, or the like.

In the present disclosure, the expression "free-standing film" may include a binder matrix structure, and as the binder matrix structure supports an electrode film or an electrode layer, the electrode film or the electrode layer may become free-standing or self-supporting. As a self-standing electrode film or a self-standing electrode active material layer includes a binder matrix structure, the self-standing electrode film or the self-standing electrode active material layer may be used without any support, such as a current collector, in fabricating a lithium battery. The self-standing electrode film or the self-standing electrode active material layer may have, for example, film strength or layer strength sufficient to be rolled, handled, and/or unrolled without other support.

In the present disclosure, the language "wet electrode" or "wet electrode film" may refer to an electrode or an electrode film that includes a solvent or intentionally uses a solvent in manufacturing an electrode. A solvent included in the wet electrode or the wet electrode film may include a process solvent, a process solvent residue, or a process solvent impurity. The wet electrode or the wet electrode film may be an electrode or an electrode film manufactured by preparing an electrode slurry including a solvent and drying the electrode slurry.

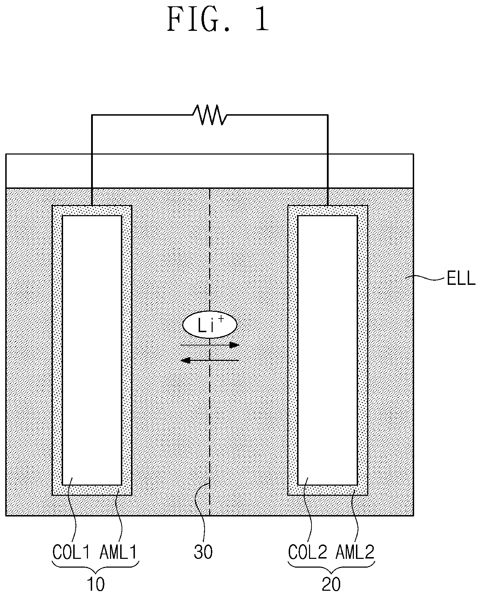

FIG. 1 is a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be between the positive electrode 10 and the negative electrode 20. The positive electrode 10, the negative electrode 20, and the separator 30 may be in contact with the electrolyte ELL. In some embodiments, the positive electrode 10, the negative electrode 20, and the separator 30 may be impregnated in (and/or with) the electrolyte ELL.

The electrolyte ELL may be a medium in which the lithium ions are migrated and transferred between the positive electrode 10 and the negative electrode 20. In the electrolyte ELL, the lithium ions may move through the separator 30 toward one of (e.g., selected from among) the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material (e.g., in a form of particles) and may further include a binder and/or a conductive material (e.g., an electrically conductive material).

For example, in some embodiments, the positive electrode 10 may further include an additive that may serve as a sacrificial positive electrode.

An amount of the positive electrode active material may be in a range of about 90 wt% to about 99.5 wt% relative to 100 wt% of a total weight of the positive electrode active material layer AML1. An amount of each of the binder and the conductive material may each be about 0.5 wt% to about 5 wt% relative to 100 wt% of a total weight of the positive electrode active material layer AML1.

The binder may serve to improve attachment of positive electrode active material particles to each other and also to improve attachment of the positive electrode active material to the current collector COL1. The binder may include, for example, one or more selected from among polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material (e.g., an electrically conductive material or electron conductor) may be used to provide an electrode with conductivity, and any suitable conductive material without causing a chemical change (e.g., that does not cause an undesirable chemical change) of a battery may be used as the conductive material to constitute the battery. The conductive material may include, for example, a carbon-based material, such as natural graphite, artificial graphite, carbon black, acetylene black, Ketjen black, carbon fiber, carbon nano-fiber, and/or carbon nano-tube; a metal powder or metal fiber containing one or more of (e.g., selected from among) copper, nickel, aluminum, and silver; a conductive polymer, such as a polyphenylene derivative; and/or a (any suitable) mixture thereof.

In one or more embodiments of the present disclosure, aluminum (Al) may be used as the current collector COL1, but embodiments of the present disclosure are not limited thereto.

### Positive Electrode Active Material

The positive electrode active material in the positive electrode active material layer AML1 may include a compound (e.g., lithiated intercalation compound) that may reversibly intercalate and deintercalate lithium. For example, in one or more embodiments, the positive electrode active material may include at least one kind of composite oxide including lithium and a metal that is selected from among cobalt, manganese, nickel, and/or a (e.g., any suitable) combination thereof.

The composite oxide may include lithium transition metal composite oxides, for example, lithium-nickel-based oxides, lithium-cobalt-based oxides, lithium-manganese-based oxides, lithium-iron-phosphate-based compounds, cobalt-free nickel-manganese-based oxides, and/or a (e.g., any suitable) combination thereof.

For example, in one or more embodiments, the positive electrode active material may include a compound represented by one selected from among chemical formulae: LiₐA_{1-b}X_{b}O_{2-c}D_{c} (where 0.90≤a≤1.8, 0≤b≤0.5, and 0≤c≤0.05); LiₐMn_{2-b}X_{b}O₄-_{c}D_{c} (where 0.90≤a≤1.8, 0≤b≤0.5, and 0≤c≤0.05); LiₐNi_{1-b-c}Co_{b}X_{c}O_{2-α}D_{α} (where 0.90≤a≤1.8, 0≤b≤0.5, 0≤c≤0.5, and 0<α<2); LiₐNi_{1-b-c}Mn_{b}X_{c}O_{2-α}D_{α} (where 0.90≤a≤1.8, 0≤b≤0.5, 0≤c≤0.5, and 0<α<2); LiₐNi_{b}Co_{c}L¹_{d}GₑO₂ (where 0.90≤a≤1.8, 0≤b≤0.9, 0≤c≤0.5, 0≤d≤0.5, and 0≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMn_{1-b}G_{b}O₂ (where 0.90≤a≤1.8 and 0.001≤b≤0.1); LiₐMn₂GbO₄ (where 0.90≤a≤1.8 and 0.001≤b≤0.1); LiₐMn_{1-g}G_{g}PO₄ (where 0.90≤a≤1.8 and 0≤g≤0.5); Li_{(3-f)}Fe₂(PO₄)₃ (where 0≤f≤2); and LiₐFePO₄ (where 0.90≤a≤1.8).

In the foregoing chemical formulae, A may be nickel (Ni), cobalt (Co), manganese (Mn), or a (e.g., any suitable) combination thereof, X may be aluminum (Al), Ni, Co, Mn, chromium (Cr), iron (Fe), magnesium (Mg), strontium (Sr), vanadium (V), a rare-earth element, or a (e.g., any suitable) combination thereof, D may be oxygen (O), fluorine (F), sulfur (S), phosphorus (P), or a (e.g., any suitable) combination thereof, G may be Al, Cr, Mn, Fe, Mg, lanthanum (La), cerium (Ce), Sr, V, or a (e.g., any suitable) combination thereof, and L¹ may be Mn, Al, or a (e.g., any suitable) combination thereof.

For example, in one or more embodiments, the positive electrode active material may be a high nickel-based positive electrode active material having a nickel content (e.g., amount) of equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of a total metal excluding lithium in the lithium transition metal composite oxide. The high nickel-based positive electrode active material may achieve high capacity and thus may be applied to a high-capacity and high-energy-density rechargeable lithium battery.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material (e.g., in a form of particles) and may further include a binder and/or a conductive material (e.g., an electrically conductive material).

For example, in one or more embodiments, the negative electrode active material layer AML2 may include a negative electrode active material of about 90 wt% to about 99 wt%, a binder of about 0.5 wt% to about 5 wt%, and a conductive material (e.g., an electrically conductive material) of about 0 wt% to about 5 wt%, based on 100 wt% of a total weight of the negative electrode active material layer.

The binder may serve to improve attachment of negative electrode active material particles to each other and also to improve attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

If (e.g., when) an aqueous binder is used as the binder of the negative electrode, a cellulose-based compound capable of providing viscosity may further be included. The cellulose-based compound may include one or more selected from among carboxymethyl cellulose, hydroxypropylmethyl cellulose, methyl cellulose, and alkali metal salts thereof. The alkali metal may include Na, K, and/or Li.

The dry binder may include a fibrillizable polymer material, for example, polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electrically conductive material or electron conductor) may be used to provide an electrode with conductivity (e.g., electrical conductivity), and any suitable conductive material without causing a chemical change (e.g., that does not cause an undesirable chemical change) of a battery may be used as the conductive material to constitute the battery. For example, in one or more embodiments, the conductive material may include a carbon-based material, such as natural graphite, artificial graphite, carbon black, acetylene black, Ketjen black, carbon fiber, carbon nano-fiber, and/or carbon nano-tube; a metal powder and/or metal fiber including one or more of (e.g., selected from among) copper, nickel, aluminum, and silver; a conductive polymer (e.g., an electrically conductive polymer) such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that may reversibly intercalate and deintercalate lithium ions, lithium metal, a lithium metal alloy, a material that may dope and de-dope lithium, and/or transition metal oxide.

The material that may reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as non-shaped (e.g., irregularly shaped), sheet-shaped, flake-shaped, sphere-shaped, and/or fiber-shaped natural graphite and/or artificial graphite, and the amorphous carbon may include soft carbon, hard carbon, mesophase pitch carbon, and/or calcined coke.

The lithium metal alloy may include an alloy of lithium and a metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material that may dope and de-dope lithium may include a Si-based negative electrode active material and/or a Sn-based negative electrode active material. The Si-based negative electrode active material may include silicon, a silicon-carbon composite, SiOₓ (where 0<x≤2), an Si-Q alloy (where Q is an alkali metal, an alkaline earth metal, a Group 13 element, a Group 14 element (except for Si), a Group 15 element, a Group 16 element, a transition metal, a rare-earth element, or a (e.g., any suitable) combination thereof), and/or a (e.g., any suitable) combination thereof. The Sn-based negative electrode active material may include Sn, SnOₖ (where 0<k≤2) (e.g., SnO₂), a Sn-based alloy, or a (e.g., any suitable) combination thereof.

The silicon-carbon composite may be a composite of silicon and amorphous carbon (e.g., in a form of particles). According to one or more embodiments, the silicon-carbon composite may have a structure in which the amorphous carbon is coated on a surface of each of the silicon particles. For example, in one or more embodiments, the silicon-carbon composite may include a secondary particle (core) in which primary silicon particles are assembled, and an amorphous carbon coating layer (shell) on a surface of the secondary particle. The amorphous carbon may also be between the primary silicon particles, and for example, the primary silicon particles may be coated with the amorphous carbon. The secondary particles may be present dispersed in an amorphous carbon matrix.

In one or more embodiments, the silicon-carbon composite may further include crystalline carbon. For example, the silicon-carbon composite may include a core including crystalline carbon and silicon particles and may also include an amorphous carbon coating layer on a surface of the core.

In one or more embodiments, the Si-based negative electrode active material and/or the Sn-based negative electrode active material may be used in combination with a carbon-based negative electrode active material.

### Separator 30

Based on a type or kind of the rechargeable lithium battery, the separator 30 may be present between the positive electrode 10 and the negative electrode 20. The separator 30 may include one or more selected from among polyethylene, polypropylene, and/or polyvinylidene fluoride, or may have a multi-layered separator thereof, such as a polyethylene/polypropylene bi-layered separator, a polyethylene/polypropylene/polyethylene tri-layered separator, or a polypropylene/polyethylene/polypropylene tri-layered separator.

The separator 30 may include a porous substrate and a coating layer on a surface (e.g., one surface or two opposite surfaces) of the porous substrate, and the coating layer may include an organic material, an inorganic material, and/or a (e.g., any suitable) combination thereof.

The porous substrate may be a polymer layer including one selected from among polyolefin, such as polyethylene and polypropylene, polyester, such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, a glass fiber, and polytetrafluoroethylene (e.g., Teflon^{™}), or may be a copolymer or a mixture including two or more thereof.

The organic material may include a polyvinylidenefluoride-based copolymer and/or a (meth)acrylic copolymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, and/or a (e.g., any suitable) combination thereof, but embodiments of the present disclosure are not limited thereto.

In one or more embodiments, the organic material and the inorganic material may be present mixed in one coating layer or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may serve as a medium for transmitting ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethyl methyl carbonate (EMC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The aprotic solvent may include nitriles, such as R-CN (where R is a hydrocarbon group having a C2 to C20 linear, branched, or cyclic structure and may include a double bond, an aromatic ring, or an ether group); amides, such as dimethylformamide; dioxolanes, such as 1,3-dioxolane and/or 1,4-dioxolane; and/or sulfolanes.

The non-aqueous organic solvent may be used alone or in a mixture of two or more thereof.

In some embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a rechargeable lithium battery and plays a role in enabling a basic operation of the rechargeable lithium battery and in promoting the movement of lithium ions between the positive electrode and the negative electrode. The lithium salt may include, for example, at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

### Rechargeable Lithium Battery

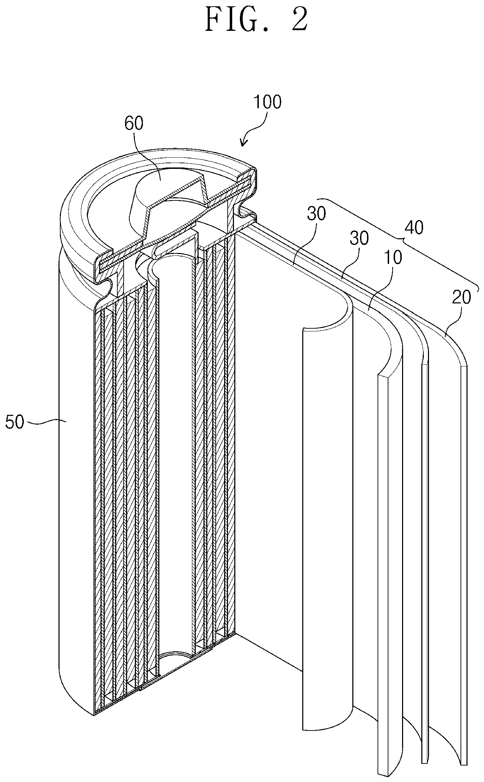

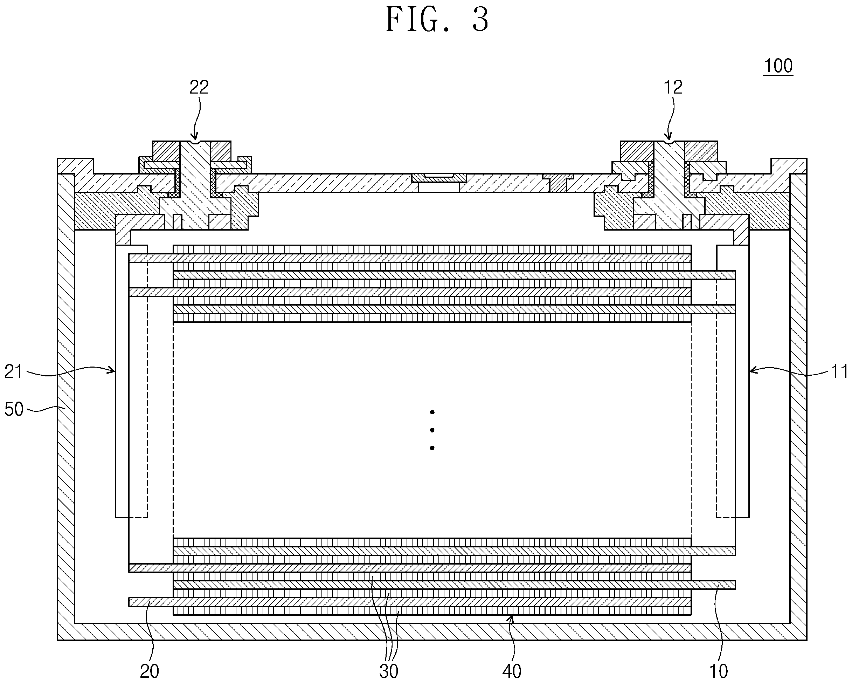

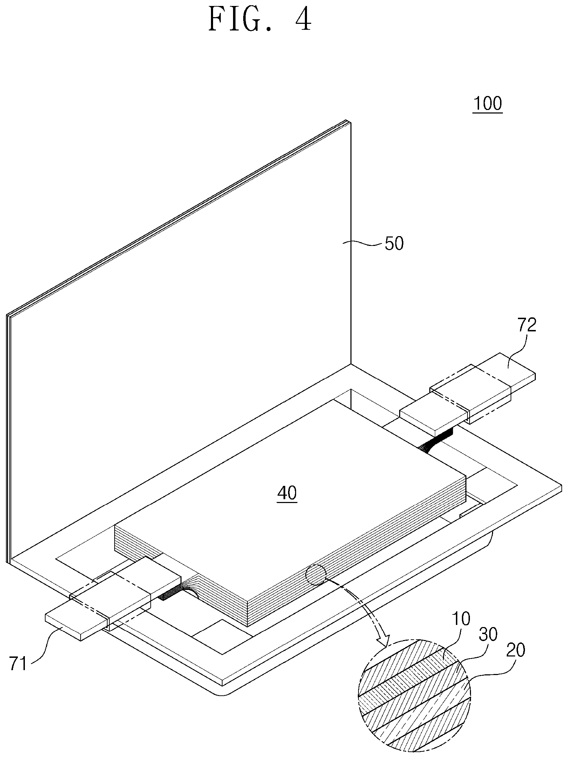

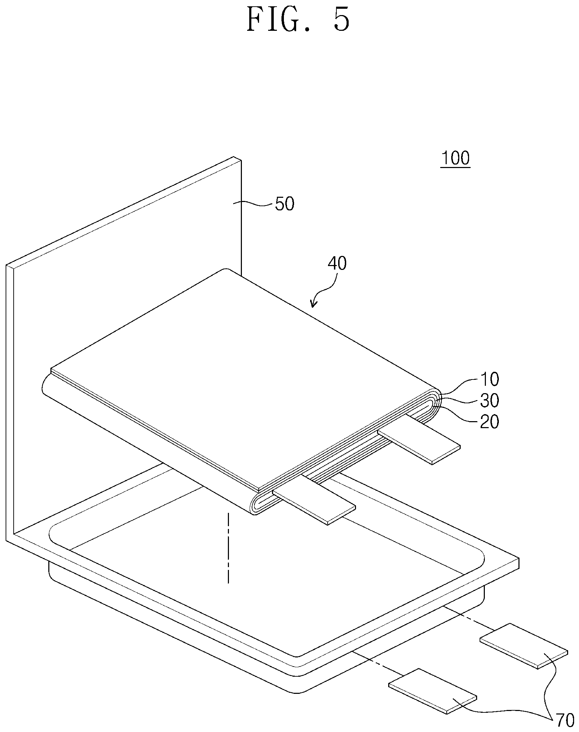

Based on the shape of a rechargeable lithium battery, the rechargeable lithium battery may be classified into cylindrical, prismatic, pouch, or coin types (kinds). FIGS. 2-5 each is a simplified diagram showing a rechargeable lithium battery according to one or more embodiments of the present disclosure, FIG. 2 shows a cylindrical battery, FIG. 3 shows a prismatic battery, and FIGS. 4-5 each shows a pouch-type or kind of batteries. Referring to FIGS. 2-5, a rechargeable lithium battery 100 may include an electrode assembly 40 in which a separator 30 is between a positive electrode 10 and a negative electrode 20 and may also include a casing 50 in which the electrode assembly 40 is accommodated. In some embodiments, the positive electrode 10, the negative electrode 20, and the separator 30 may be impregnated with an electrolyte. In some embodiments, the rechargeable lithium battery 100 may include a sealing member 60 that seals the casing 50 as illustrated in FIG. 2. In some embodiments, as illustrated in FIG. 3, the rechargeable lithium battery 100 may include a positive electrode lead tab 11, a positive electrode terminal 12, a negative electrode lead tab 21, and a negative electrode terminal 22. In some embodiments, as shown in FIGS. 4-5, the rechargeable lithium battery 100 may include an electrode tab 70, or a positive electrode tab 71 and a negative electrode tab 72, which serve(s) as an electrical path for externally inducing a current generated in the electrode assembly 40.

The positive electrode active material layer AML1 and the negative electrode active material layer AML2 discussed with reference to FIG. 1 may be formed with a dry electrode film which will be discussed below according to some embodiments of the present disclosure.

### Method of Manufacturing Dry Electrode Film

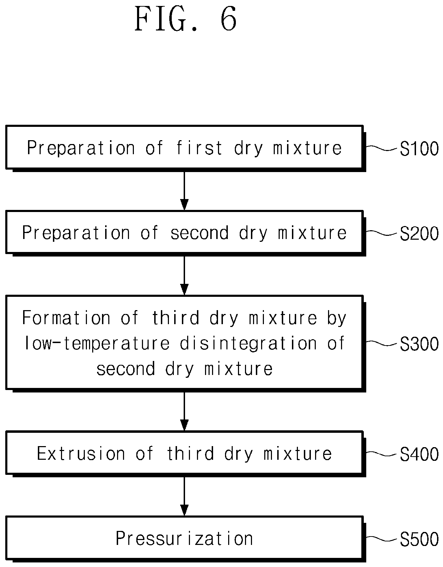

FIG. 6 is a flow chart showing a method of manufacturing a dry electrode film according to one or more embodiments of the present disclosure. Referring to FIG. 6, a method of manufacturing a dry electrode film may include an act of preparing a first dry mixture (S100), an act of preparing a second dry mixture (S200), an act of disintegrating the second dry mixture at low temperatures to prepare a third dry mixture (S300), an act of extruding the third dry mixture (S400), and an act of pressurizing (S500).

The first dry mixture act S100 includes adding electrode materials to prepare a first dry mixture.

The electrode materials include an electrode active material, a dry binder, and a conductive material (i.e., an electrically conductive material).

In one or more embodiments, the electrode active material may include a positive electrode active material discussed with reference to FIG. 1. For example, in some embodiments, the electrode active material may include at least one positive electrode active material selected from among lithium-cobalt-based oxides, lithium-nickel-based oxides, lithium-manganese-based oxides, lithium-iron-phosphate-based compounds, and/or cobalt-free nickel-manganese-based oxides.

In one or more embodiments, the electrode active material may include a negative electrode active material discussed with reference to FIG. 1. For example, in some embodiments, the electrode active material may include at least one negative electrode active material selected from among a carbon-based negative electrode active material, a Si-based negative electrode active material, and/or a Sn-based negative electrode active material.

In one or more embodiments, the electrode active material may include two or more active materials whose average particles diameters are different from each other. For example, in some embodiments, the electrode active material may include a first electrode active material whose average particle diameter is 10 µm to 50 µm and a second electrode active material whose average particle diameter is 1 µm to 10 µm.

In one or more embodiments, the electrode active material may be added in an amount of 80 wt% to 99 wt% relative to the total weight of the electrode active material, the dry binder, and the conductive material. For example, in some embodiments, the electrode active material may be added in an amount of 85 wt% to 99 wt%, 90 wt% to 98 wt%, or 95 wt% to 98 wt% relative to a total weight of the electrode active material, the dry binder, and the conductive material.

As discussed above with reference to FIG. 1, the dry binder may be a fibrillizable polymer material. For example, in some embodiments, the dry binder may include at least one selected from among polytetrafluoroethylene (PTFE), polyvinylidene fluoride (PVDF), polyvinylidene fluoride-hexafluoropropylene (PVDF-HFP) copolymers, and/or polyethylene oxide (PEO). According to one embodiment, the dry binder is PTFE.

The dry binder may undergo fiberization to serve as a matrix that supports and binds the electrode materials such as the electrode active material and the conductive material.

A scanning electron microscope (SEM) image of an electrode cross-section may be used to ascertain that the dry binder has a fibrous morphology. For example, in some embodiments, the dry binder may have an aspect ratio of equal to or greater than 10, equal to or greater than 20, equal to or greater than 50, or equal to or greater than 100.

In one or more embodiments, the dry binder may be added in an amount of 0.5 wt% to 10 wt% relative to the total weight of the electrode active material, the dry binder, and the conductive material. For example, in some embodiments, the dry binder may be added in an amount of 1 wt% to 5 wt% relative to a total weight of the electrode active material, the dry binder, and the conductive material.

In one or more embodiments, the conductive material may be added in an amount of 0.5 wt% to 10 wt% relative to the total weight of the electrode active material, the dry binder, and the conductive material. For example, in some embodiments, the conductive material may be added in an amount of 1 wt% to 5 wt% relative to a total weight of the electrode active material, the dry binder, and the conductive material.

The second dry mixture act S200 includes dry mixing the first dry mixture. Therefore, the dry binder may undergo fiberization and a paste-like second dry mixture is obtained.

The dry mixing is performed without any solvent.

A mixer may be used to perform the dry mixing. The kind of mixer may not be limited as long as the mixer may apply a shear stress to materials for mixing. For example, in some embodiments, the mixer may include a chamber, at least one rotation shaft provided in the chamber, and a blade rotatably connected (e.g., coupled) to the rotation shaft and provided in a longitudinal direction of the rotation shaft. The blade may include, for example, at least one selected from among a paddle blade, a ribbon blade, a sigma blade, a Z blade, a dispersion blade, and/or a screw blade. For example, in some embodiments, the mixer may be one selected from among a paddle mixer, a ribbon mixer, a planetary mixer, a dual shaft mixer, a high-speed impeller mixer, a propeller mixer, and/or a planetary disperser (PD) mixer.

The dry mixing may be performed one or more times.

The dry mixing includes a first dry mixing and a second dry mixing. The first dry mixing and the second dry mixing may be performed in the same mixer and at different conditions.

In one or more embodiments, the first dry mixing may be performed at a rotation speed of equal to or less than 2,000 rpm. The first dry mixing may be performed for 15 minutes or less. For example, the first dry mixing may be performed for 5 minutes to 15 minutes at a rotation speed of 500 rpm to 2,000 rpm. There may be no particular limitation on temperatures of the first dry mixing. For example, the first dry mixing may be performed at a temperature ranging from 10 °C to 65 °C or from 25 °C to 65 °C. The electrode materials may be uniformly (e.g., substantially uniformly) mixed through the first dry mixing.

In one or more embodiments, the second dry mixing may be performed at a rotation speed of equal to or greater than 4,000 rpm. The second dry mixing may be performed for 10 minutes or more. For example, the second dry mixing may be performed for 10 minutes to 60 minutes at a rotation speed of 4,000 rpm to 9,000 rpm. The second dry mixing is performed at a temperature at which the dry binder undergoes fiberization and a paste-like second dry mixture is obtained. For example, the second dry mixing may be performed at a temperature ranging from 19 °C to 65 °C or from 25 °C to 65 °C. The dry binder may be fiberized through the second dry mixing and a paste-like second dry mixture is obtained. The fibrillated dry binder may effectively bind the electrode materials together.

In one or more embodiments, polytetrafluoroethylene (PTFE) as the dry binder may be fiberized at a temperature of equal to or greater than 19 °C to bind the electrode materials such as the electrode active material and the conductive material. Therefore, the electrode active material, the dry binder, and the conductive material may form a stable network structure.

The second dry mixing may uniformly (e.g., substantially uniformly) mix and bind the electrode materials including the electrode active material, the dry binder, and the conductive material, and thus a second dry mixture is prepared in the form of a paste without any solvent.

The third dry mixture act S300 includes disintegrating the second dry mixture to prepare a third dry mixture.

In the present disclosure, the term "disintegration" refers to a process of reducing the paste-like second dry mixture into relatively small sizes by applying impact, compression, shear, and/or cutting forces.

The disintegration process is performed to reduce the second dry mixture to a set or certain size or less without destroying the network structure formed by that the fibrillated dry binder binds the electrode active material and the conductive material.

In one or more embodiments, the disintegration process may cause the second dry mixture to be disintegrated into a size of 100 µm to 1 mm.

In one or more embodiments, the disintegration process may include a third dry mixing, which may be performed with the mixer used in the previous dry mixing process. For example, the mixer may include a chamber, at least one rotation shaft provided in the chamber, and a blade rotatably connected (e.g., coupled) to the rotation shaft and provided in a longitudinal direction of the rotation shaft. The blade may include, for example, at least one selected from a paddle blade, a ribbon blade, a sigma blade, a Z blade, a dispersion blade, and a screw blade. For example, the mixer may be one selected from among a paddle mixer, a ribbon mixer, a planetary mixer, a dual shaft mixer, a high-speed impeller mixer, a propeller mixer, and a planetary disperser (PD) mixer.

In one or more embodiments, a mixer rotation speed in the disintegration process may be less than that in the second dry mixing process. For example, the disintegration process may be performed at a rotation speed of equal to or less than 1,000 rpm. The time duration of the disintegration process may be appropriately selected based on the mixer rotation speed.

In one or more embodiments, the disintegration process may be performed for 10 minutes or less. For example, the disintegration process may be performed at a rotation speed of 500 rpm to 1,000 rpm for 10 seconds to 10 minutes, 1 minute to 5 minutes, or 2 minutes to 3 minutes.

The disintegration process is performed by a mill and/or a crusher capable of applying impact and/or compressive force to the second dry mixture. For example, the mill may be a bead mill, a ball mill, a spike mill, a basket mill, and/or an attrition mill. The crusher may be a roll crusher.

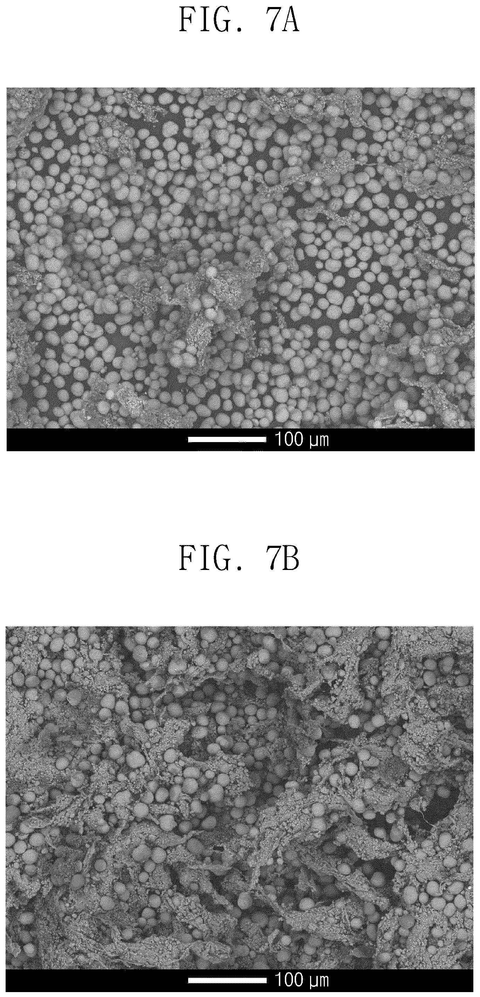

The disintegration process is performed at a temperature below a fiberization temperature of the dry binder, i.e. below the temperature during the second dry mixing. In the present disclosure, the term "fiberization temperature" refers to a temperature at which the dry binder may be fiberized. As the disintegration process is performed at a temperature below the fiberization process, the dry binder is prevented from being over-fiberized (or over-fiberization may be reduced). Thus, it may be possible to maintain equilibrium of an internal structure formed by the binding of the dry binder and other electrode materials (see FIG. 7B).

The disintegration temperature is performed at a temperature in the range of 5°C to 18°C. For example, if the dry binder includes polytetrafluoroethylene (PTFE), the disintegration temperature is equal to or greater than 5 °C and equal to and less than 18 °C, for example, equal to or greater than 10 °C and equal to and less than 18 °C. As the disintegration process is performed at equal to or less than 18 °C, the polytetrafluoroethylene (PTFE) may be prevented from being over-fiberized (or over-fiberization may be reduced). For example, as the disintegration process is performed within the temperature range above, an electrode film having superior tensile strength may be manufactured without damage to the electrode active material or the conductive material.

There may be no specific restriction on a method of adjusting the disintegration temperature. For example, the disintegration temperature may be reduced by circulating a coolant through a mixer and/or the like.

The extrusion act S400 includes extruding the third dry mixture.

The extrusion may be performed by an extruder. The third dry mixture may be introduced into an extruder and extruded in the form of a sheet. Thus, it may be possible to form a dry electrode sheet in the form of a self-standing film.

In one or more embodiments, a pressure of the extrusion may range from 4 MPa to 100 MPa. For example, the extrusion pressure may range from 10 MPa to 90 MPa or from 30 MPa to 70 MPa.

The method of manufacturing a dry electrode film further includes the pressurization act S500. The pressurization act S500 may include pressurizing the dry electrode sheet formed in the extrusion act S400.

A pressurization method may not be especially limited and may use a roll press and/or a plate press.

In one or more embodiments, the dry electrode sheet may be rolled at a pressure of 1.0 ton/cm² to 10.0 tons/cm².

It may thus be possible to manufacture a dry electrode film according to embodiments of the present disclosure.

The dry electrode film manufactured according to some embodiments of the present disclosure may be a self-standing film. For example, the dry electrode film may maintain a film shape without any support. The dry electrode film may be prepared as a self-standing film, and then may be provided on an electrode current collector.

In a manufacturing method according to some embodiments of the present disclosure, a disintegration process may be performed at low temperatures, and thus there may be an increase in binding force between a fibrillated binder and an electrode active material. Therefore, the electrode active material may be uniformly (e.g., substantially uniformly) distributed in an electrode.

In some embodiments, a side reaction with Li caused by over-fiberization of the binder may be suppressed or reduced in a dry electrode film manufactured according to some embodiments of the present disclosure, and thus there may be an improvement in initial efficiency of a rechargeable lithium battery including the dry electrode film.

### Method of Manufacturing Dry Electrode

A method of manufacturing a dry electrode according to some embodiments of the present disclosure may include an act of manufacturing a dry electrode film and an act of performing a lamination of a current collector and the dry electrode film.

The manufacturing of the dry electrode film may include the method of manufacturing the dry electrode film discussed with reference to FIG. 6.

The current collector may be the positive electrode current collector COL1 or the negative electrode current collector COL2 discussed with reference to FIG. 1. For example, if (e.g., when) the dry electrode film includes a positive electrode active material, the current collector may be the positive electrode current collector COL1, and if (e.g., when) the dry electrode film includes a negative electrode active material, the current collector may be the negative electrode current collector COL2.

The act of performing a lamination of a current collector and the dry electrode film may include placing the dry electrode film on the current collector and integrally pressurizing the current collector and the dry electrode film.

In one or more embodiments, the dry electrode film may be provided on one surface or opposite surfaces (e.g., two opposite surfaces) of the current collector.

A pressurization method may not be especially limited and may use a roll press and/or a plate press.

It may therefore be possible to manufacture the positive electrode 10 or the negative electrode 20 discussed with reference to FIG. 1.

The following will describe Embodiments and Comparative Examples of the present disclosure. The following Embodiments, however, are merely examples, and the present disclosure is not limited to Embodiments discussed below.

### Embodiment 1

### Manufacturing of Dry Positive Electrode Film

There were used LiNi_{0.896}CO_{0.072}Mn_{0.032}O₂ (NCM) having an average particle diameter (D₅₀) of 14 µm as a positive electrode active material, carbon black as a conductive material, and polytetrafluoroethylene (PTFE) as a dry binder. The positive electrode active material, the conductive material, and the dry binder were added in a weight ratio of 96:2:2 to prepare a first dry mixture.

The materials were introduced into a blade mixer, and then a first dry mixing was performed for 12 minutes at a rotation speed of 900 rpm under a temperature of 25 °C to uniformly mix the positive electrode active material, the conductive material, and the binder. Then, a second dry mixing was performed such that the mixed first dry mixture was mixed for 22 minutes at a rotation speed of 4,500 rpm under a temperature of 25 °C to prepare a second dry mixture.

The second dry mixture was introduced into and cooled in a mill, and a blade mixer was used to disintegrate the second dry mixture for 2 minutes at a rotation speed of 500 rpm under a temperature of 5 °C to prepare a third dry mixture. A coolant was circulated outside the mill to maintain a cooling temperature of 5 °C during the milling.

The prepared third dry mixture was introduced into an extruder and extruded to prepare a positive electrode sheet. A pressure of the extrusion was 45 MPa. The prepared positive electrode sheet was rolled to manufacture a self-standing dry positive electrode film.

### Manufacturing of Dry Positive Electrode

The dry positive electrode film was provided on an aluminum film having a thickness of 12 µm and passed through a lamination roller to manufacture a dry positive electrode.

### Fabrication of Coin Cell

The dry positive electrode and the following materials were used to fabricate a coin cell.
Counter electrode: lithium metal
Separator: polytetrafluoroethylene (PTFE) separator
Electrolyte: lithium salt (1.3M LiPF₆) and solvent (ethylene carbonate (EC), ethylmethyl carbonate (EMC), and dimethyl carbonate (DMC) mixed in a volume ratio of 3:4:3)

### Embodiment 2

A dry positive electrode film, a dry positive electrode, and a coin cell were fabricated in the same method as in Embodiment 1, except that the second dry mixture was cooled and that the disintegration process was performed at 10 °C.

### Embodiment 3

A dry positive electrode film, a dry positive electrode, and a coin cell were fabricated in the same method as in Embodiment 1, except that the second dry mixture was cooled and that the disintegration process was performed at 18 °C.

### Comparative Example 1

A dry positive electrode film, a dry positive electrode, and a coin cell were fabricated in the same method as in Embodiment 1, except that no disintegration process was performed.

### Comparative Example 2

A dry positive electrode film, a dry positive electrode, and a coin cell were fabricated in the same method as in Embodiment 1, except that the second dry mixture was less cooled and that the disintegration process was performed at 19 °C.

### Comparative Example 3

A dry positive electrode film, a dry positive electrode, and a coin cell were fabricated in the same method as in Embodiment 1, except that the second dry mixture was not cooled and that the disintegration process was performed at 25 °C.

### Comparative Example 4

A dry positive electrode film, a dry positive electrode, and a coin cell were fabricated in the same method as in Embodiment 1, except that the second dry mixture was cooled and that the disintegration process was performed at 4 °C.

### Evaluation Example 1: SEM Image of Dry Electrode Film

The dry electrode films manufactured in Example 3 and Embodiment 2 were captured to obtain scanning electron microscope (SEM) images, and the results are shown in FIGS. 7A-7B. FIG. 7A illustrates an SEM image showing the dry electrode film of Comparative Example 3, and FIG. 7B illustrates an SEM image showing the dry electrode film of Embodiment 2.

Referring to FIG. 7A, it may be ascertained that the active materials are separated due to a reduction in binding force between the active material and PTFE in the dry electrode film of Comparative Example 3 in which the disintegration process was performed at 25 °C. In some embodiments, referring to FIG. 7B, it may be ascertained that there is an excellent binding force between the active material and PTFE in the dry electrode film of Embodiment 2 in which the disintegration process was performed at 10 °C, and that the network structure is firmly maintained even after the disintegration process.

### Evaluation Example 2: Tensile Break Strength

The dry positive electrode films manufactured in Embodiments 1 to 3 and Comparative Examples 1 to 4 were measured to obtain their tensile strength at break (e.g., at the respective breaking points), and the results are listed in Table 1. The manufactured dry positive electrode film was fabricated into a strip specimen with a width of 15 mm and a length of 50 mm, and the tensile strength of the specimen was measured at a test speed of 5 mm/min and a temperature of 23 °C using a tensile testing apparatus in which the opposite ends of the specimen in a longitudinal direction were held by chucks spaced apart at 10 mm. The tensile strength at break is considered as tensile break strength [kPa]. The measured results are listed in Table 1.

**Table 1**

| Category | Tensile Break Strength [kPa] |
|---|---|
| Embodiment 1 | 500 |
| Embodiment 2 | 580 |
| Embodiment 3 | 600 |
| Comparative Example 1 | - |
| Comparative Example 2 | 430 |
| Comparative Example 3 | 350 |
| Comparative Example 4 | 400 |

Referring to Table 1, it may be ascertained that high tensile strength is given to the dry positive electrode films of Embodiments 1 to 3 in which the low-temperature disintegration process was performed. For example, it may be ascertained that significantly excellent tensile strength is given to the dry positive electrode films of Embodiments 2 and 3 in which the disintegration process was performed at 10 °C and 18 °C, respectively. In contrast, when no disintegration process was performed, it was impossible to measure tensile strength due to the difficulty in manufacturing a uniform film (Comparative Example 1). In addition, it may be ascertained that relatively low tensile strength is given to the dry positive electrode films of Comparative Examples 2 and 3 in which the disintegration process was performed at a temperature of equal to or greater than 19 °C and Comparative

Example 4 in which the disintegration process was performed at a temperature of 4 °C.

### Evaluation Example 3: Initial Charge/Discharge Efficiency

Table 2 lists initial charge/discharge efficiencies (ICE) of the coin cells fabricated in Embodiments 1 to 3 and Comparative Examples 1 to 4. The coin cell was charged at 25 °C with a constant current at 0.1C rate until a voltage was 4.3 V (vs. Li), and then the current was cut-off at 0.05C rate while a voltage was maintained at 4.3 V in a constant voltage mode. Then, the coin cell was discharged with a constant current of 0.1C rate until a voltage was 2.8 V (vs. Li), and then an initial charge/discharge efficiency was measured.

**Table 2**

| Category | ICE [%] |
|---|---|
| Embodiment 1 | 87.8 |
| Embodiment 2 | 88.2 |
| Embodiment 3 | 88.1 |
| Comparative Example 1 | - |
| Comparative Example 2 | 86.5 |
| Comparative Example 3 | 85.8 |
| Comparative Example 4 | 86.3 |
| Initial charge/discharge efficiency (ICE) [%] = [initial discharge capacity / initial charge capacity] × 100 | |

Referring to Table 2, it may be ascertained that superior initial charge/discharge efficiency is given to rechargeable lithium batteries of Embodiments 1 to 3 in which the low-temperature disintegration process was performed. For example, it may be ascertained that significantly excellent initial charge/discharge efficiency is given to rechargeable lithium batteries of Embodiments 2 and 3 in which the disintegration process was performed at 10 °C and 18 °C, respectively. In some embodiments, it may be ascertained that, if (e.g., when) no disintegration process was performed, it is hard to secure reliable initial charge/discharge efficiency due to the difficulty in manufacturing a uniform (e.g., substantially uniformly) film (Comparative Example 1), and that relatively low initial charge/discharge efficiency is given to rechargeable lithium batteries of Comparative Examples 2 and 3 in which the disintegration process was performed at a temperature of 19 °C or higher and Comparative Example 4 in which the disintegration process was performed at a temperature of 4 °C.

A dry electrode film manufactured according to some embodiments of the present disclosure may have superior tensile strength.

A rechargeable lithium battery including a dry electrode manufactured according to some embodiments of the present disclosure may have excellent initial charge/discharge efficiency.

## Claims

1. A method of manufacturing a dry electrode film, comprising:
performing a first dry mixing of an electrode active material, a dry binder, and a conductive material to prepare a first dry mixture;
performing a second dry mixing of the first dry mixture to prepare a paste-like second dry mixture; and
performing disintegration of the second dry mixture by a mill and/or a crusher to prepare a third dry mixture, the disintegration being performed at a temperature in the range of 5°C to 18°C and which is less than a temperature during the second dry mixing.

2. The method as claimed in claim 1, wherein the dry binder comprises at least one selected from among polytetrafluoroethylene (PTFE), polyvinylidene fluoride (PVDF), polyvinylidene fluoride-hexafluoropropylene (PVDF-HFP) copolymers, and polyethylene oxide (PEO).

3. The method as claimed in claim 2, wherein the dry binder is polytetrafluoroethylene (PTFE).

4. The method as claimed in any one of the preceding claims, wherein the first dry mixing and second dry mixing is performed by a mixer, wherein:
the first dry mixing is performed at a rotation speed of equal to or less than 2,000 rpm; and
the second dry mixing is performed at a rotation speed of equal to or greater than 4,000 rpm.

5. The method as claimed in claim 4, wherein the first dry mixing is performed at a rotation speed of 500 rpm to 2,000 rpm and at 25 °C to 65 °C for 5 minutes to 15 minutes; and
the second dry mixing is performed at a rotation speed of 4,000 rpm to 9,000 rpm and at 25 °C to 65 °C for 10 minutes to 60 minutes.

6. The method as claimed in any one of the preceding claims, wherein the disintegration is performed at a temperature of equal to or greater than 10 °C and equal to or less than 18 °C.

7. The method as claimed in claim 1, wherein the disintegration comprises a third dry mixing and wherein the third dry mixing is performed at a rotation speed of 500 rpm to 1,000 rpm for 10 seconds to 10 minutes.

8. The method as claimed in any one of the preceding claims, further comprising performing extrusion on the third dry mixture to form a dry electrode sheet.

9. The method as claimed in claim 8, wherein the extrusion is performed at a pressure of 4 MPa to 100 MPa.

10. The method as claimed in claim 8 or 9, further comprising performing pressurization on the dry electrode sheet.

11. The method as claimed in claim 10, wherein the pressurization is performed at a pressure of 1.0 ton/cm² to 10.0 tons/cm².

12. The method as claimed in any one of the preceding claims, wherein the electrode active material comprises at least one positive electrode active material selected from among lithium-cobalt-based oxide, lithium-nickel-based oxide, lithium-manganese-based oxide, lithium-iron-phosphate-based compounds, and cobalt-free nickel-manganese-based oxide.

13. The method as claimed in any one of claims 1 to 11, wherein the electrode active material comprises at least one negative electrode active material selected from among a carbon-based negative electrode active material, a Si-based negative electrode active material, and a Sn-based negative electrode active material.

14. The method as claimed in any one of the preceding claims, wherein
the electrode active material is added in an amount of 80 wt% to 99 wt% relative to the total weight of the electrode active material, the dry binder, and the conductive material;
the dry binder is added in an amount of 0.5 wt% to 10 wt% relative to the total weight of the electrode active material, the dry binder, and the conductive material; and
the conductive material is added in an amount of 0.5 wt% to 10 wt% relative to the total weight of the electrode active material, the dry binder, and the conductive material,
wherein the amounts of the electrode active material, the dry binder, and the conductive material sum up to 100 wt%.

15. A rechargeable lithium battery comprising the dry electrode film manufactured in the method as claimed in claim 1.
